# EUROPÄISCHE PATENTSCHRIFT

(11) **EP 3 040 477 B1**
(45) Veröffentlichungstag und Bekanntmachung des Hinweises auf die Patenterteilung: **08.08.2018**
(21) Anmeldenummer: 15196114.1
(22) Anmeldetag: 04.06.2012
(51) Int. Cl.: E01C 23/088, E01C 19/00

(54) **VERFAHREN UND VORRICHTUNG ZUM BESTIMMEN EINER VON MINDESTENS EINER BAUMASCHINE ODER ABBAUMASCHINE MIT EINER FRÄSWALZE GEFRÄSTEN VOLUMENS**
METHOD AND DEVICE FOR DETERMINING A VOLUME MILLED BY AT LEAST ONE CONSTRUCTION MACHINE OR REMOVAL MACHINE WITH A ROTARY CUTTER
PROCEDE ET DISPOSITIF DE DETERMINATION D'UN VOLUME FRAISEE PAR AU MOINS UN ENGIN OU D'ABATTEUSE A L'AIDE D'UN CYLINDRE DE FRAISAGE

(30) Priorität: 10.06.2011 DE 102011106139
(43) Veröffentlichungstag der Anmeldung: 06.07.2016
(62) Teilanmeldung aus: 12725758.2
(73) Patentinhaber: Wirtgen GmbH, 53578 Windhagen (DE)
(72) Erfinder: Paulsen, Sven, 56656 Brohl (DE); Wagner, Stefan, 53604 Bad Honnef (DE); Barimani, Cyrus, 53639 Königswinter (DE); Hähn, Günter, 53639 Königswinter (DE)
(74) Vertreter: dompatent von Kreisler Selting Werner - Partnerschaft von Patent- und Rechtsanwälten mbB

(56) Entgegenhaltungen:
- EP-A1- 2 119 832
- DE-C1- 19 756 676
- DE-U1- 9 204 614
- JP-A- H09 125 700

## Beschreibung

Die Erfindung betrifft ein Verfahren zum Bestimmen einer von einer Baumaschine oder einer Abbaumaschine mit einer Fräswalze gefrästen Volumens, sowie eine Baumaschine oder Abbaumaschine zum Bearbeiten einer vorgegebenen Fläche, die das gefräste Volumen bestimmt. Beim Bearbeiten von Boden- oder Verkehrsflächen mittels Fräsen, Stabilisierern oder Recyclern, sowie beim Abbauen von Vorkommen mittels Abbaumaschinen (Surface Miner) wird für die Dokumentation und die Abrechnung der Dienstleistung auf der Baustelle üblicherweise die gefräste Fläche und/oder das gefräste Volumen als Basis für die Abrechnung der Dienstleistung benötigt. Diese Daten werden beispielsweise aus zuvor bekannten bzw. bestimmten Daten aus Kartenmaterial oder Vermessungsunterlagen bestimmt oder geschätzt, wobei hier vereinfachend davon ausgegangen wird, dass die tatsächlich gefräste Fläche bzw. das tatsächlich gefräste Volumen genau der vorher im Auftrag genannten zu fräsenden Fläche bzw. dem zu fräsenden Volumen entspricht.

Aus der DE 92 04 614 U1 ist eine Vorrichtung bekannt, bei der das Oberflächenprofil eines mittels einer Fräswalze zu bearbeitenden Straßenbelages bestimmt werden kann, damit aufgrund der Profilstruktur unter Berücksichtigung der Bearbeitungstiefe das bearbeitete Volumen bestimmt werden kann.

Es ist auch bekannt, nach Abschluss der Fräsarbeiten mit Hilfe einfacher Messgeräte (z.B. Wegmessrad und Zollstock) eine mehr oder weniger genaue Bestimmung der gefrästen Fläche bzw. des gefrästen Volumens durchzuführen.

Schließlich ist es auch bekannt, aus der von einer Maschinensteuerung herauslesbaren oder gemessenen Wegstrecke und einer Frästiefe unter der Annahme, dass die installierte Fräswalzenbreite der effektiv gefrästen Fräsbreite entspricht, einen Näherungswert für das momentan gefräste Volumen zu bestimmen und durch Integration ein Tagesvolumen zu ermitteln.

Es hat sich allerdings herausgestellt, dass die tatsächlich gefräste Fläche bzw. das tatsächlich gefräste Volumen in der Praxis von den in einem Dienstleistungsauftrag festgelegten geometrischen Daten bzw. den aus Vermessungsunterlagen oder Karten hergeleiteten Daten abweicht, wobei das tatsächlich gefräste Volumen in der Regel größer ist. Dies ist demzufolge für das Dienstleistungsunternehmen nachteilig, da die ungenaue Abrechnung zu seinen Lasten geht. Ein Grund hierfür kann z.B. die Dreidimensionalität eines Streckenverlaufs z.B. eines Autobahnabschnitts in einer hügeligen Gegend sein, weil die Länge einer Frästrajektorie in der Kartenprojektion geringer ist als in dem dreidimensionalen Streckenverlauf. Einen weiteren Grund bilden Zusatzarbeiten, die vor der Auftragsvergabe nicht bekannt oder nicht absehbar waren und deshalb in den Vermessungsunterlagen oder Karten nicht wiedergegeben sind.

Das Aufmessen mit einfachen Messmitteln (Wegmessrad, Zollstock) ist auch nur eine mehr oder weniger genaue Annäherung an die tatsächlich erbrachte Dienstleistung, da häufig auch komplexe Fräsgeometrien bearbeitet werden, die mit einfachen Mitteln rechnerisch nicht zugänglich sind.

Derartige Abrechnungsmethoden sind nicht nur ungenau, sondern auch zeitaufwändig.

Der Erfindung liegt daher die Aufgabe zugrunde, ein Verfahren und eine Bau- oder Abbaumaschine zu schaffen, mit der die mit mindestens einer Bau- oder Abbaumaschine erbrachte Dienstleistung zeitnah, automatisch, mit hoher Genauigkeit und kostengünstig erfasst werden kann.

Zur Lösung dieser Aufgabe dienen die Merkmale der Ansprüche 1 und 11.

Bei einem Verfahren zum Bestimmen eines von einer Baumaschine oder von einer Abbaumaschine mit einer Maschinensteuerung mit einer Fräswalze gefrästen Volumens sind folgende Schritte erfindungsgemäß vorgesehen:
- Bearbeiten einer vorgegebenen Fläche in mehreren Frästrajektorien durch die eine Maschine,
- Bestimmen der Länge der Frästrajektorien (6), an denen ein Fräsbetrieb stattgefunden hat, durch Auswerten der fortlaufenden Maschinenpositionen,
- Bestimmen des gefrästen Volumens entlang der Frästrajektorien (6) durch Erfassen des aktuellen Frästiefenquerprofils in Abhängigkeit der Maschinenposition,
- Aufsummieren der bisher gefrästen Teilvolumina als Produkt der Länge der Frästrajektorie (6) und der installierten Breite (FB) der Fräswalze unter Einbeziehung des in Abhängigkeit der Maschinenposition aktuellen Frästiefenquerprofils, wobei das entlang der Frästrajektorie (6) aktuell gefräste Teilvolumen fortlaufend oder nachträglich auf Überlappung oder mehrfache Überlappung mit bisher gefrästen Teilvolumen geprüft wird und sich überlappende Teilvolumen als Überlappungsvolumina von den aufsummierten bisher gefrästen Teilvolumina in Abzug gebracht werden.

Die erfindungsgemäße Lösung hat den Vorteil, dass am Ende eines Arbeitstages oder am Ende eines Dienstleistungsauftrages die erbrachte Dienstleistung automatisch bestimmt wird und am Ende der Tätigkeit unmittelbar abrufbar ist.

Dabei werden Leerfräsungen und Überlappungen oder sogar mehrfache Überlappungen von Frästrajektorien automatisch berücksichtigt.

Ein besonderer Vorteil dieses Lösungsweges besteht darin, dass eine separate sensorische bzw. messtechnische Erfassung der aktuellen Überlappung nicht erforderlich ist. Vielmehr wird die Überlappung durch Auswertung genauer Positionsmessungen aus den Frästrajektorien bestimmt.

Die Bearbeitung der vorgegebenen Fläche erfolgt in mehreren Frästrajektorien mit einer oder mehreren Maschinen.

Die Längen der jeweiligen Frästrajektorien, an denen ein Fräsbetrieb stattgefunden hat, werden durch Auswerten der fortlaufenden Maschinenposition bestimmt.

Es wird dabei festgestellt, wann ein Fräsbetrieb stattfindet und wann nicht. Hierzu besteht die Möglichkeit, dass die Bedienungsperson die Information, manuell eingibt. Alternativ kann auch automatisch festgestellt werden, wann ein Fräsbetrieb stattfindet, z.B. indem festgestellt wird, ob sich die Fräswalze dreht oder nicht, oder ob das Transportband in Betrieb ist oder nicht, oder welche Leistung der Verbrennungsmotor aktuell erbringt. Ein solches Signal ist beispielsweise von der Maschinensteuerung abrufbar. Am besten geeignet ist allerdings ein Signal, dass die eingestellte oder aktuelle Frästiefe erfasst. Im Resultat können daher ausschließlich die bisher gefrästen Teilflächen als Produkt der Länge der Frästrajektorie und der installierten Breite der Fräswalze erfasst werden. Wegstrecken der Maschine, an denen kein Fräsbetrieb stattfindet, werden daher nicht aufsummiert.

Bei Beendigung der Fräsarbeiten sind die insgesamt aufsummierten gefrästen Teilflächen abzüglich der insgesamt festgestellten Überlappungsflächen als gefräste Fläche als Arbeitsergebnis z.B. von einem Speicher abrufbar.

Die Maschinenposition einer jeden Maschine wird anhand mindestens eines Referenzpunktes an der Maschine bestimmt. Der Referenzpunkt ist vorzugsweise, oberhalb der Fräswalze, z.B. auf dem Dach eines Fahrstandes angeordnet. Besonders bevorzugt ist ein Referenzpunkt, der orthogonal zum Maschinenrahmen in einer gemeinsamen vertikalen Ebene durch die Fräswalzenachse liegt, wenn die Maschine auf einer horizontalen Ebene steht.

Zur Bestimmung der Maschinenposition wird vorzugsweise mindestens ein GNSS-Empfänger (Global Navigation Satellite System) verwendet. Ein solches System zur Positionsbestimmung und Navigation nutzt Signale von Navigationssatelliten und/oder Pseudoliten.

Es besteht auch alternativ die Möglichkeit, zusätzlich Referenzpositionsdaten eines ortsfesten GNSS-Empfängers oder eines Datenreferenzdienstes zu verwenden, um die Genauigkeit zu steigern.

Alternativ zu einer Positionsbestimmungseinrichtung auf Basis eines GNSS-Empfängers kann auch eine Totalstation verwendet werden. Eine Totalstation ist ein elektronischer Theodolit, integriert mit einer elektronischen Entfernungsmesseinrichtung, um die Neigung und den Abstand des Instrumentes von dem Referenzpunkt zu messen.

Die Positionsdaten können aufgrund des bisherigen und weiteren Verlaufs der Frästrajektorien oder aufgrund aufgezeichneter Vorschub- und Lenkwinkeldaten aus der Maschinensteuerung der Maschine als Ersatzdaten berechnet werden.

Die aufgezeichneten Positionsdaten vor und hinter einer Datenlücke aufgrund von Empfangsstörungen können durch interpolierte Ersatzdaten ergänzt werden, so dass ein lückenloser Verlauf der Frästrajektorien verwertet werden kann.

Die Positionsdaten und die Referenzpositionsdaten können drahtlos auf einen externen Rechner übertragen werden. Dies ist besonders vorteilhaft, wenn die Daten mehrerer Maschinen zur Berechnung der erbrachten Fräsarbeit ausgewertet werden sollen.

Zum Bestimmen des gefrästen Volumens entlang der Frästrajektorien kann die aktuelle Frästiefe in der Mitte der Fräswalze (in Längsrichtung gesehen) oder das aktuelle Frästiefenquerprofil in Abhängigkeit der Maschinenposition erfasst werden, wobei sich das gefräste Volumen aus den insgesamt aufsummierten Teilvolumina abzüglich der insgesamt festgestellten Überlappungsvolumina ergibt. Dabei können auch unterschiedliche Frästiefen hinsichtlich der einzelnen Frästrajektorien berücksichtigt werden.

Bei diesem Verfahren wird in vorteilhafter Weise die aktuelle Frästiefe bzw. ein Frästiefenquerprofil zu jeder aktuellen Position der Maschine längs der Frästrajektorie mit abgespeichert.

Bei einer Baumaschine oder Abbaumaschine zum Bearbeiten einer vorgegebenen Fläche in mehreren Frästrajektorien, mit einer Fräswalze einer vorgegebenen Fräsbreite, einer Positionsbestimmungseinrichtung zur Bestimmung der aktuellen Maschinenposition und einer Maschinensteuerung, ist vorgesehen, dass
- die Positionsbestimmungseinrichtung der Maschine Positionsdaten der Maschine erzeugt,
- ein Rechner aus den fortlaufenden Positionsdaten die Länge der jeweiligen Frästrajektorie berechnet, an der ein Fräsbetrieb stattgefunden hat
- der Rechner (20) zusätzlich mindestens ein Frästiefensignal bezüglich des aktuellen Frästiefenquerprofils erhält und der aktuellen Maschinenposition der Maschine (1) zuordnet,
- der Rechner (20) die Frästrajektorien (6) durch Erfassen der fortlaufenden Maschinenpositionen, an denen ein Fräsbetrieb stattfindet, hinsichtlich ihrer Länge berechnet und unter Einbeziehung des in Abhängigkeit der Maschinenposition aktuellen Frästiefenquerprofils die bisher gefrästen Teilvolumina berechnet und aufsummiert,
- der Rechner (20) die aktuell gefrästen Teilvolumina fortlaufend oder nachträglich auf Überlappung oder mehrfache Überlappung mit den bisher aufsummierten Teilvolumina prüft und sich überlappende Volumina von den aufsummierten gefrästen Teilvolumina in Abzug bringt,
- wobei der Rechner (20) das gefräste Volumen aus den insgesamt aufsummierten Teilvolumina abzüglich der entsprechend bestimmten insgesamt festgestellten Überlappungsvolumina berechnet.

Im Folgenden wird unter Bezugnahme auf die Zeichnungen ein Ausführungsbeispiel der Erfindung näher erläutert.

Es zeigen:
- Fig. 1: eine Baumaschine in Form einer Straßenfräsmaschine,
- Fig. 2: eine Ansicht der Straßenfräsmaschine von hinten, und
- Fig. 3: verschiedene Frästrajektorien einer zu bearbeitenden Fläche.

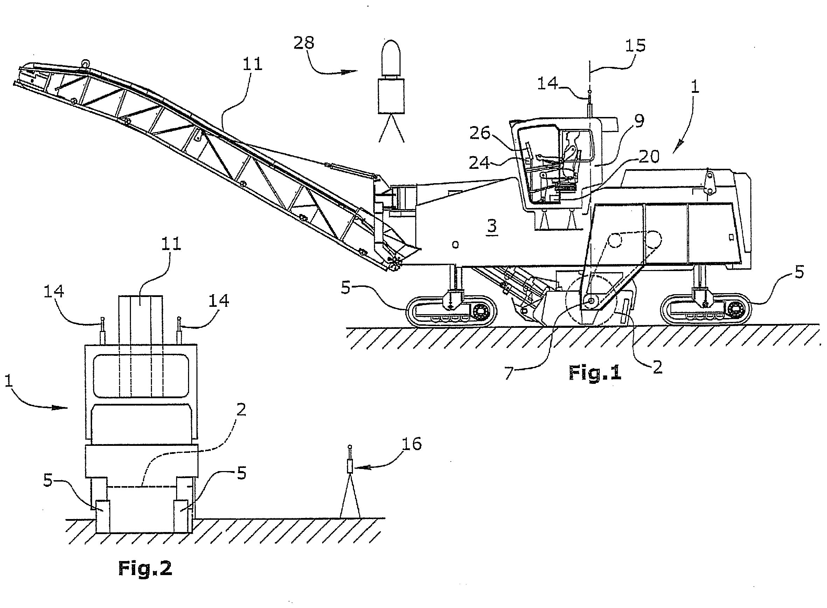

Die in Fig. 1 gezeigte Maschine 1 ist eine Baumaschine, nämlich eine Straßenfräsmaschine, und ist stellvertretend für alle Arten von Maschinen mit einer Fräswalze 2 dargestellt, die eine Boden- oder Verkehrsfläche bearbeiten.

Hierzu zählen auch Abbaumaschinen, mit denen z.B. im Tagebau Vorkommen abgebaut werden und auch als Surface Miner bezeichnet werden.

Die in Fig. 1 gezeigte Maschine 1 weist einen Maschinenrahmen 3 auf, in dem die Fräswalze 2 starr oder höhenverstellbar gelagert ist. Die Maschine 1 wird von einem Fahrwerk getragen, das in Fig. 1 von Kettenlaufwerken 5 gebildet ist. Das abgefräste Material kann mit einem Transportband 11 auf ein Transportfahrzeug geladen werden. Der Maschinenrahmen 3 trägt auf der Oberseite einen Fahrstand 9, der aus einer Kabine bestehen kann. In dem Fahrstand 9 sitzt oder steht eine Bedienungsperson, die mit Hilfe einer Maschinensteuerung 26 die Funktionen der Maschine 1 steuert. Diese Maschinenfunktionen sind beispielsweise Vorschubgeschwindigkeit, Lenkung, Frästiefe der Fräswalze 2, u.s.w. Die Maschine 1 ist mit einer Positionsbestimmungseinrichtung 24 versehen, die ihre Informationen an einen Rechner 20 zur weiteren Verarbeitung weiterleiten kann, wobei der Rechner 20 auch in die Maschinensteuerung 26 integriert sein kann. Desweiteren kann vorgesehen sein, dass die Positionsbestimmungseinrichtung 24 in den Rechner 20 integriert ist.

Über dem Fahrstand 9, z.B. auf dem Dach der Fahrkabine, kann ein GNSS-Empfänger 14 als Teil der Positionsbestimmungseinrichtung 24 angeordnet sein, der vorzugsweise so angeordnet ist, dass er in einer gemeinsamen vertikalen Ebene 15 mit der Fräswalzenachse 7 der Fräswalze 2 liegt, wenn die Maschine 1 horizontal ausgerichtet ist.

Der GNSS-Empfänger 14 bildet einen Referenzpunkt an der Maschine 1, mit dessen Hilfe die aktuelle Maschinenposition bestimmt werden kann.

Es können auch andere Referenzpunkte an der Maschine 1 ausgewählt werden, wobei dann die Positionsdaten zur Berechnung der Maschinenposition entsprechend korrigiert werden müssen. Die für die Berechnung relevante Maschinenposition ist die Mitte der Fräswalze 2, bezogen auf ihre Längserstreckung. Daher befindet sich ein einzelner GNSS-Empfänger 14 vorzugsweise vertikal über dieser Mittelposition der Fräswalze 2, wenn die Maschine 1 auf einer horizontalen Ebene steht bzw. der Maschinenrahmen 3 horizontal ausgerichtet ist. Auch wenn der GNSS-Empfänger exakt dort angebracht ist, müssen die Positionsdaten korrigiert werden. Auf eine Korrektur könnte nur verzichtet werden, wenn die Maschine zu jeder Zeit auf einer horizontalen Ebene arbeitet und dabei in Längs- sowie in Querrichtung parallel zu dieser ausgerichtet bleibt. Sobald eine Quer- oder Längsneigung der Maschine 1 zur Horizontalen vorliegt, muss eine Korrektur erfolgen, also nahezu immer. Hierzu sind entsprechende Neigungssensoren vorhanden.

Es besteht auch die Möglichkeit, zwei GNSS-Empfänger 14 zu verwenden, wie dies grundsätzlich aus Fig. 2 ersichtlich ist. Wesentlich ist, dass diese beiden GNSS-Empfänger 14 einen gegenseitigen Abstand aufweisen. Auch bei Einsatz von zwei GNSS-Empfängern 14, wie in Fig. 2 dargestellt, liegen diese vorzugsweise in der Ebene 15 und auf gleicher Höhe. Es versteht sich allerdings, dass die beiden GNSS-Empfänger 14 auch an anderen Stellen der Maschine 1 angeordnet sein können.

Die GNSS-Empfänger 14 sollen möglichst auf dem Dach des Fahrstandes 9 angeordnet sein, damit zum einen die Störung durch reflektierte Signale möglichst klein sind und zum anderen beim Durchfahren einer mit Bäumen berandeten Fräsfläche wenigstens ein GNSS-Empfänger 14 nicht durch die Bäume den Kontakt zu allen Satelliten verliert.

Zusätzlich können Referenzpositionsdaten eines ortsfesten GNSS-Empfängers 16 oder eines Datenreferenzdienstes verwendet werden, um die Genauigkeit der Bestimmung der Maschinenposition zu erhöhen. Als weitere Alternative zur Bestimmung der Maschinenposition kann eine Totalstation 28 verwendet werden, die einen Referenzpunkt an der Maschine dreidimensional verfolgen kann, wobei auch mehrere Totalstationen 28 zum Einsatz kommen können. Wenn eine Totalstation zum Einsatz kommt, dann muss der mindestens eine GNSS-Empfänger durch mindestens ein Messprisma ersetzt werden.

Mit Hilfe der Positionsbestimmungseinrichtung 24 kann die aktuelle Position der Maschine 1 aufgezeichnet werden und somit die Fahrstrecke entlang der Frästrajektorien 6 hinsichtlich ihrer Länge mit Hilfe eines internen oder externen Rechners 20 berechnet und gespeichert werden.

Zu Beginn einer zu erfassenden Fräsdienstleistung wird ein Speicher des Rechners 20, in dem die bereits gefräste Fläche 4 speicherbar ist, auf Null gesetzt. Wird nun eine in einem Auftrag vorgegebene Fläche durch mindestens eine Maschine 1 gefräst, wird mit Hilfe der ermittelten Daten zur Maschinenposition und deren fortlaufende Veränderung zunächst die Länge der Frästrajektorien 6 bestimmt und dann unter Berücksichtigung der installierten Breite FB der Fräswalze 2 die bisher gefräste Teilfläche 4 berechnet, und aufsummiert. Die bisher gefräste Teilfläche 4 wird in dem Speicher des Rechners 20 gespeichert, wobei die entlang der Frästrajektorie 6 gefräste Fläche 4 fortlaufend oder nachträglich auf Überlappung oder Mehrfachüberlappung mit bisher gefrästen Teilflächen 8 überprüft wird. Wird im Rechner eine Überlappung festgestellt, werden sich überlappende Teilflächen als Überlappungsflächen 10 von den aufsummierten, bisher gefrästen Teilflächen 8 im Speicher in Abzug gebracht. Beispielsweise können die Frästrajektorien 6 mit Hilfe von zweidimensionalen oder dreidimensionalen Koordinaten gespeichert werden. Die Maschinensteuerung bzw. die Bedienungsperson teilt dem Rechner mit, ob aktuell ein Fräsbetrieb stattfindet oder nicht, so dass Leerfahrten der Maschine 1 nicht erfasst werden. Im Falle der Erfassung der Frästiefe zur Berechnung der gefrästen Volumina kann auf eine solche Mitteilung an den Rechner verzichtet werden, da der Rechner anhand der eingestellten Frästiefe selbst feststellen kann, ob aktuell ein Fräsbetrieb stattfindet. Anstelle der eingestellten Frästiefe kann auch die effektive Frästiefe verwendet werden, wenn diese in der Maschinensteuerung vorliegt. Alternativ könnten andere Signale aus der Maschinensteuerung verwendet werden, z.B. ein Einschaltsignal für die Fräswalze oder ein Einschaltsignal für das Transportband zum Abtransportieren des Fräsgutes oder Signale aus der Motorsteuerung, z.B. das Drehmoment des Antriebsmotors für die Fräswalze.

Bei Beendigung und Abschluss des Auftrags ist aus dem Speicher die tatsächlich gefräste Fläche 4 abrufbar, so dass der dort gespeicherte und vollautomatisch ermittelte Wert als Basis für die Abrechnung mit einem Auftraggeber benutzt werden kann.

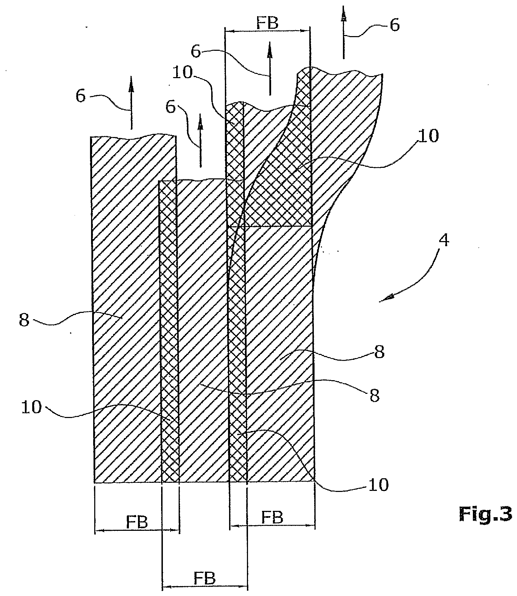

Fig. 3 zeigt mehrere nebeneinander angeordnete Frästrajektorien 6 auf einer zu fräsenden Fläche 4.

Es sind in Fig. 3 zusätzlich die bisher gefrästen Teilflächen 8 und die dadurch entstehenden Überlappungsflächen 10 dargestellt, die aus den längs der Frästrajektorie 6 aufsummierten Flächen in Abzug zu bringen sind. Bei dem in Fig. 3 gezeigten Beispiel einer zu fräsenden Fläche 4 sind vier Frästrajektorien 6 unterschiedlicher Länge mit z.T. mehrfachen Überlappungen ersichtlich.

In bestimmten Fällen, z.B. in denen der Fräsauftrag unterschiedliche Frästiefen beinhaltet, kann es notwendig sein, als Basis zur Abrechnung des Dienstleistungsauftrags, nicht die gefräste Fläche zugrunde zu legen, sondern das gefräste Volumen.

In diesem Fall ist vorgesehen, zusätzlich zur Bestimmung der Länge der Frästrajektorien 6 und der gefrästen Flächen, zusätzlich die aktuelle Frästiefe aufzuzeichnen, so dass der Rechner 20 das gefräste Volumen bestimmen kann. Die aktuelle Frästiefe kann in Relation zur Mitte der Fräswalze 2 bezogen auf ihre Längsrichtung bestimmt werden. Alternativ kann das aktuelle Frästiefenquerprofil quer zur Breite der Maschine 1 aus den Daten der Maschinensteuerung entnommen werden und in Abhängigkeit der Maschinenposition erfasst werden. Das gefräste Volumen ergibt sich dann aus den insgesamt aufsummierten Teilvolumina abzüglich der insgesamt festgestellten Überlappungsvolumina.

Die aktuelle Frästiefe kann ggf. auch gemessen werden, wenn sie nicht aus der Maschinensteuerung 26 ausgelesen werden soll.

Im Falle von mehreren Maschinen 1 ist für jede Maschine mindestens ein Referenzpunkt vorgesehen.

Im Falle von mehreren Maschinen kann eine der Maschinen 1 als federführend bestimmt werden.

Insbesondere bei mehreren Maschinen 1 kann der Rechner 20 auch extern ortsfest angeordnet sein oder in der federführenden Maschine 1 angeordnet sein, wobei der Datenaustausch von Positionsdaten, Referenzpositionsdaten oder Ersatzdaten aus der Maschinensteuerung 26 aller Maschinen 1 drahtlos, z.B. über Satellit oder Mobilfunkstrecke, erfolgt.

Der Rechner 20 kann bei Empfangsstörungen des mindestens einen an einer Maschine 1 angebrachten GNSS-Empfängers 14 zu fehlenden oder offensichtlich fehlerhaften Positionsdaten Ersatzdaten berechnen und die fehlenden Positionsdaten ergänzen bzw. die fehlerhaften Positionsdaten ersetzen. Dies kann durch Interpolation aus in Relation zum Zeitpunkt der Empfangsstörung früheren und späteren Positionsdaten berechnet werden. Alternativ können Ersatzdaten aus in der jeweiligen Maschinensteuerung 26 einer Maschine 1 aufgezeichneten Vorschub- und Lenkwinkeldaten berechnet werden.

## Patentansprüche

1. Verfahren zum Bestimmen eines von einer Baumaschine oder einer Abbaumaschine (1) mit einer Maschinensteuerung (26) mit einer Fräswalze (2) gefrästen Volumens durch
- Bearbeiten einer vorgegebenen Fläche (4) in mehreren Frästrajektorien (6) durch die Maschine (1),
- Bestimmen der Länge der Frästrajektorien (6), an denen ein Fräsbetrieb stattgefunden hat, durch Auswerten der fortlaufenden Maschinenpositionen,
- Bestimmen des gefrästen Volumens entlang der Frästrajektorien (6) durch Erfassen des aktuellen Frästiefenquerprofils in Abhängigkeit der Maschinenposition,
- Aufsummieren der bisher gefrästen Teilvolumina als Produkt der Länge der Frästrajektorie (6) und der installierten Breite (FB) der Fräswalze unter Einbeziehung des in Abhängigkeit der Maschinenposition aktuellen Frästiefenquerprofils, wobei das entlang der Frästrajektorie (6) aktuell gefräste Teilvolumen fortlaufend oder nachträglich auf Überlappung oder mehrfache Überlappung mit bisher gefrästen Teilvolumen geprüft wird und wobei das gefräste Volumen aus den insgesamt aufsummierten Teilvolumina abzüglich der entsprechend bestimmten insgesamt festgestellten Überlappungsvolumina berechnet wird.

2. Verfahren nach Anspruch 1, **dadurch gekennzeichnet, dass** das Frästiefenquerprofil zu jeder aktuellen Position der Maschine (1) längs der Frästrajektorie (6) mit abgespeichert wird.

3. Verfahren nach einem der Ansprüche 1 oder 2, **dadurch gekennzeichnet, dass** zum Bestimmen der Maschinenposition mindestens ein GNSS-Empfänger (14) verwendet wird.

4. Verfahren nach Anspruch 3, **dadurch gekennzeichnet, dass** zusätzlich Referenzpositionsdaten eines ortsfesten GNSS-Empfängers (16), oder eines Datenreferenzdienstes verwendet werden.

5. Verfahren nach einem der Ansprüche 1 oder 2, **dadurch gekennzeichnet, dass** zur Bestimmung der Maschinenposition mindestens eine Totalstation (28) verwendet wird.

6. Verfahren nach einem der Ansprüche 1 bis 5, **dadurch gekennzeichnet, dass** die aktuelle Maschinenposition aufgezeichnet wird und die Fahrstrecke entlang der Frästrajektorien (6) hinsichtlich der Länge berechnet und gespeichert wird.

7. Verfahren nach einem der Ansprüche 1 bis 6, **dadurch gekennzeichnet, dass** die Positionsdaten aufgrund des bisherigen und weiteren Verlaufs der Frästrajektorien (6) oder aufgrund aufgezeichneter Vorschub- und Lenkwinkeldaten der Maschine (1) berechnet oder korrigiert werden.

8. Verfahren nach Anspruch 1 bis 7, **dadurch gekennzeichnet, dass** die erbrachte Fräsdienstleistung am Ende der Frästätigkeit unmittelbar aus einem Speicher abgerufen wird.

9. Verfahren nach einem der Ansprüche 1 bis 8, **gekennzeichnet durch** das Bestimmen der Länge der Frästrajektorien (6), an denen ein Fräsbetrieb stattgefunden hat, durch Erhalt eines den Fräsbetrieb anzeigenden Signals, das manuell durch die Bedienungsperson eingegeben wird oder durch Abrufen von den Fräsbetrieb anzeigenden Signalen aus der Maschinensteuerung (26) oder einer Motorsteuerung.

10. Verfahren nach Anspruch 9, **gekennzeichnet durch** das automatische Bestimmen der Länge der Frästrajektorien (6), an denen ein Fräsbetrieb stattgefunden hat, durch Abrufen von Signalen aus der Maschinensteuerung (26), die den Betrieb der Fräswalze (2) oder des Transportbandes (11) oder die Einstellung einer vorgegebenen oder aktuellen Frästiefe oder von Signalen aus der Motorsteuerung, die die aktuelle Leistung oder das Drehmoment des Antriebsmotors für die Fräswalze (2) anzeigen.

11. Baumaschine oder Abbaumaschine (1) zum Bearbeiten einer vorgegebenen Fläche (4) in mehreren Frästrajektorien (6), mit einer Fräswalze (2) einer vorgegebenen Fräsbreite (FB), einer Positionsbestimmungseinrichtung (24) zur Bestimmung der aktuellen Maschinenposition und einer Maschinensteuerung (26),
**dadurch gekennzeichnet, dass**
- die Positionsbestimmungseinrichtung (24) der Maschine (1) Positionsdaten der Maschine (1) erzeugt,
- ein Rechner (20) aus den fortlaufenden Positionsdaten die Länge der jeweiligen Frästrajektorie (6) berechnet, an denen ein Fräsbetrieb stattfindet,
- der Rechner (20) zusätzlich mindestens ein Frästiefensignal bezüglich des aktuellen Frästiefenquerprofils erhält und der aktuellen Maschinenposition der Maschine (1) zuordnet,
- der Rechner (20) die Frästrajektorien (6) durch Erfassen der fortlaufenden Maschinenpositionen, an denen ein Fräsbetrieb stattfindet, hinsichtlich ihrer Länge berechnet und unter Einbeziehung des in Abhängigkeit der Maschinenposition aktuellen Frästiefenquerprofils die bisher gefrästen Teilvolumina berechnet und aufsummiert,
- der Rechner (20) die aktuell gefrästen Teilvolumina fortlaufend oder nachträglich auf Überlappung oder mehrfache Überlappung mit den bisher aufsummierten Teilvolumina prüft und sich überlappende Volumina von den aufsummierten gefrästen Teilvolumina in Abzug bringt,
- wobei der Rechner (20) das gefräste Volumen aus den insgesamt aufsummierten Teilvolumina abzüglich der entsprechend bestimmten insgesamt festgestellten Überlappungsvolumina berechnet.

12. Baumaschine oder Abbaumaschine (1) nach Anspruch 11, **dadurch gekennzeichnet, dass** die Positionsbestimmungseinrichtung (24) die aktuelle Position aufzeichnet und die Fahrstrecke entlang der Frästrajektorien (6) hinsichtlich der Länge mit Hilfe des Rechners (20) berechnet und speichert.

13. Baumaschine oder Abbaumaschine (1) nach Anspruch 11 oder 12, **dadurch gekennzeichnet, dass** der Rechner (20) das aktuelle Frästiefenquerprofil aus der Maschinensteuerung (26) erhält, das in Abhängigkeit der Maschinenposition erfasst ist.

14. Baumaschine oder Abbaumaschine (1) nach einem der Ansprüche 11 bis 13, **dadurch gekennzeichnet, dass** die Positionsbestimmungseinrichtung (24) Daten der aktuellen Maschinenposition aufgrund von Daten der Maschinensteuerung (26), vorzugsweise von Vorschub- und Lenkwinkeldaten, berechnet.

15. Baumaschine oder Abbaumaschine (1) nach Anspruch 11 bis 14, **dadurch gekennzeichnet, dass** der Rechner (20) einen Speicher aufweist, aus dem das gefräste Volumen der Fräsdienstleistung abrufbar ist.

## Claims

1. Method for determining a volume milled by a construction machine or mining machine (1) having a machine control system (26), by means of a milling drum (2), by
- working a predetermined area (4) in several milling trajectories (6) by the machine (1),
- determining the length of the milling trajectories (6) along which a milling operation has taken place, by evaluating the continuous machine positions,
- determining the milled volume along the milling trajectories (6) by detecting the current milling depth transverse profile in dependence on the machine position,
- adding up the previously milled partial volumes as a product of the length of the milling trajectory (6) and the installed width (FB) of the milling drum, with inclusion of the milling depth transverse profile currently existing in dependence on the machine position, wherein the partial volume currently milled along the milling trajectory (6) is checked, either continuously or subsequently, for overlapping or multiple overlapping with any previously milled partial volumes, and wherein the milled volume is computed from the total added-up partial volumes minus the correspondingly determined totality of the detected overlapping volumes.

2. Method in accordance with claim 1, **characterized in that** there is also stored the milling depth transverse profile for each current position of the machine (1) along the milling trajectory (6).

3. Method in accordance with any one of claims 1 or 2, **characterized in that** at least one GNSS receiver (14) is used to determine the machine position.

4. Method in accordance with claim 3, **characterized in that**, in addition, reference positioning data from a stationary GNSS receiver (16) or from a data reference service are used.

5. Method in accordance with any one of claims 1 or 2, **characterized in that** at least one total station (28) is used to determine the machine position.

6. Method in accordance with any one of claims 1 to 5, **characterized in that** the current machine position is recorded and the moving path along the milling trajectory (6) is computed in respect to its length and is stored.

7. Method in accordance with any one of claims 1 to 6, **characterized in that** the position data are computed or corrected on the basis of the previous and further development of the milling trajectories (6) or on the basis of recorded advance and steering angle data of the machine (1).

8. Method in accordance with any one of claims 1 to 7, **characterized in that** the performed milling work is directly retrieved from a memory at the end of the milling activity.

9. Method in accordance with any one of claims 1 to 8, **characterized by** determining the length of the milling trajectories (6) where a milling operation has been performed, by obtaining a signal indicating the milling operation that is manually input by the operating person, or by retrieving signals indicating the milling operation from the machine control system (26) or a motor control system.

10. Method in accordance with claim 9, **characterized by** automatically determining the length of the milling trajectories (6) where a milling operation has been performed, by retrieving signals from the machine control system (26) that indicate the operation of the milling roller (2) or of the transport belt (11) or the setting of a predetermined or current milling depth, or signals from a motor control system that indicate the current performance or the moment of rotation of the drive motor for the milling roller (2).

11. Construction machine or mining machine (1) for working a predetermined area (4) in several milling trajectories (6), comprising a milling drum (2) of a predetermined milling width (FB), a position determination device (24) for determining the current machine position, and a machine control system (26),
**characterized in that**
- the position determination device (24) of the machine (1) generates positioning data of the machine (1),
- a computer (20) computes, from the continuous positioning data, the length of the respective milling trajectory (6) along which a milling operation is taking place
- the computer (20) additionally receives at least one milling depth signal with respect to the current milling depth transverse profile and assigns said signal to the current machine position of the machine (1),
- the computer (20) computes, in terms of their length, the milling trajectories (6) by detecting the continuous machine position at which a milling operation is taking place and, with inclusion of the milling depth transverse profile currently existing in dependence on the machine position, computes and adds up the previously milled partial volumes,
- the computer (20) checks, either continuously or subsequently, the currently milled partial volumes for overlapping or multiple overlapping with the previously added-up partial volumes and deducts overlapping volumes from the added-up milled partial volumes,
- wherein the computer (20) computes the milled volume from the totality of added-up partial volumes minus the total established overlapping volumes determined accordingly.

12. Construction machine or mining machine (1) in accordance with claim 11, **characterized in that** the position determination device (24) records the current position and computes and stores the moving path along the milling trajectories (6) in terms of the length with the aid of the computer (20).

13. Construction machine or mining machine (1) in accordance with claim 11 or 12, **characterized in that** the computer (20) receives the current milling depth transverse profile from the machine control system (26) that is detected in accordance with the machine position.

14. Construction machine or mining machine (1) in accordance with any one of claims 11 to 13, **characterized in that** the position determination device (24) computes data of the current machine position on the basis of data of the machine control system (26), preferably advance and steering angle data.

15. Construction machine or mining machine (1) in accordance with any one of claims 11 to 14, **characterized in that** the computer (20) comprises a memory from which the milled volume of the milling work can be retrieved.

## Revendications

1. Procédé destiné à déterminer un volume fraisé avec un tambour de fraisage (2) d'une machine de construction ou d'une machine d'abattage (1) avec une commande de machine (26) par
- traitement par la machine (1) d'une surface (4) prédéfinie dans plusieurs trajectoires de fraisage (6),
- détermination de la longueur des trajectoires de fraisage (6) sur lesquelles une opération de fraisage a été effectuée, par analyse des positions de machine continues,
- détermination du volume fraisé le long des trajectoires de fraisage (6) par détection du profil transversal de profondeur de fraisage actuel en fonction de la position de machine,
- totalisation des volumes partiels fraisés jusqu'à présent en tant que produit de la longueur de la trajectoire de fraisage (6) et de la largeur installée (FB) du tambour de fraisage en prenant en compte le profil transversal de profondeur de fraisage actuel en fonction de la position de machine, le volume partiel fraisé actuellement le long de la trajectoire de fraisage (6) étant contrôlé de façon continue ou a posteriori à la recherche d'un chevauchement ou d'un chevauchement répété avec des volumes partiels fraisés jusqu'à présent, et le volume fraisé étant calculé à partir des volumes partiels totalisés au total moins les volumes de chevauchement constatés au total déterminés en conséquence.

2. Procédé selon la revendication 1, **caractérisé en ce que** le profil transversal de profondeur de fraisage pour chaque position actuelle de la machine (1) le long de la trajectoire de fraisage (6) est enregistré conjointement.

3. Procédé selon l'une des revendications 1 ou 2, **caractérisé en ce qu'**au moins un récepteur GNSS (14) est utilisé pour la détermination de la position de machine.

4. Procédé selon la revendication 3, **caractérisé en ce que**, en plus, des données de position de référence d'un récepteur GNSS (16) stationnaire ou d'un service de référence de données sont utilisées.

5. Procédé selon l'une des revendications 1 ou 2, **caractérisé en ce qu'**au moins une station totale (28) est utilisée pour la détermination de la position de machine.

6. Procédé selon l'une des revendications 1 à 5, **caractérisé en ce que** la position de machine actuelle est enregistrée, et le trajet le long des trajectoires de fraisage (6) en ce qui concerne la longueur est calculé et mémorisé.

7. Procédé selon l'une des revendications 1 à 6, **caractérisé en ce que** les données de position sont calculées ou corrigées sur la base de l'allure constatée jusqu'à présent et ensuite des trajectoires de fraisage (6) ou sur la base de données d'avance et d'angle de braquage enregistrées de la machine (1).

8. Procédé selon les revendications 1 à 7, **caractérisé en ce que** la prestation de fraisage exécutée est appelée à la fin de l'activité de fraisage directement à partir d'une mémoire.

9. Procédé selon l'une des revendications 1 à 8, **caractérisé par** la détermination de la longueur des trajectoires de fraisage (6) sur lesquelles une opération de fraisage a été effectuée par l'obtention d'un signal qui indique l'opération de fraisage et qui est entré manuellement par l'opérateur, ou par l'appel de signaux indiquant l'opération de fraisage à partir de la commande de machine (26) ou d'une commande de moteur.

10. Procédé selon la revendication 9, **caractérisé par** la détermination automatique de la longueur des trajectoires de fraisage (6) sur lesquelles une opération de fraisage a été effectuée, par l'appel de signaux à partir de la commande de machine (26) qui indiquent l'opération du tambour de fraisage (2) ou de la bande de transport (11) ou le réglage d'une profondeur de fraisage prédéfinie ou actuelle, ou de signaux à partir de la commande de machine qui indiquent la puissance actuelle ou le couple du moteur d'entraînement pour le tambour de fraisage (2).

11. Machine de construction ou machine d'abattage (1) destinée à traiter une surface (4) prédéfinie dans plusieurs trajectoires de fraisage (6), avec un tambour de fraisage (2) d'une largeur de fraisage (FB) prédéfinie, un dispositif de détermination de position (24) destiné à déterminer la position de machine actuelle et une commande de machine (26),
**caractérisée en ce que**
- le dispositif de détermination de position (24) de la machine (1) produit des données de position de la machine (1),
- à partir des données de position continues, un calculateur (20) calcule la longueur de la trajectoire de fraisage (6) respective sur laquelle est effectuée une opération de fraisage,
- le calculateur (20) obtient à titre supplémentaire au moins un signal de profondeur de fraisage concernant le profil transversal de profondeur de fraisage actuel et l'affecte à la position de machine actuelle de la machine (1),
- le calculateur (20) calcule les trajectoires de fraisage (6) par la détection des positions de machine continues sur lesquelles est effectuée une opération de fraisage, en ce qui concerne leur longueur et, en prenant en compte le profil transversal de profondeur de fraisage actuel en fonction de la position de machine, calcule et totalise les volumes partiels fraisés jusqu'à présent,
- le calculateur (20) contrôle de façon continue ou a posteriori les volumes partiels fraisés actuellement à la recherche d'un chevauchement ou d'un chevauchement répété avec les volumes partiels totalisés jusqu'à présent et soustrait des volumes qui se chevauchent à partir des volumes partiels fraisés totalisés,
- le calculateur (20) calculant le volume fraisé à partir des volumes partiels totalisés au total moins les volumes de chevauchement constatés au total déterminés en conséquence.

12. Machine de construction ou machine d'abattage (1) selon la revendication 11, **caractérisée en ce que** le dispositif de détermination de position (24) enregistre la position actuelle et calcule et mémorise le trajet le long des trajectoires de fraisage (6) en ce qui concerne la longueur à l'aide du calculateur (20).

13. Machine de construction ou machine d'abattage (1) selon la revendication 11 ou 12, **caractérisée en ce que** le calculateur (20) obtient à partir de la commande de machine (26) le profil transversal de profondeur de fraisage actuel qui est détecté en fonction de la position de machine.

14. Machine de construction ou machine d'abattage (1) selon l'une des revendications 11 à 13, **caractérisée en ce que** le dispositif de détermination de position (24) calcule des données de la position de machine actuelle sur la base de données de la commande de machine (26), de préférence des données d'avance et d'angle de braquage.

15. Machine de construction ou machine d'abattage (1) selon les revendications 11 à 14, **caractérisée en ce que** le calculateur (20) présente une mémoire à partir de laquelle le volume fraisé de la prestation de fraisage peut être appelé.
